# EUROPÄISCHE PATENTSCHRIFT

(11) **EP 0 640 287 B1**
(45) Veröffentlichungstag und Bekanntmachung des Hinweises auf die Patenterteilung: **30.10.1996**
(21) Anmeldenummer: 94113399.3
(22) Anmeldetag: 26.08.1994
(51) Int. Cl.: A21C 1/14

(54) **Vorrichtung zur Herstellung von Teig**
Device for preparing dough
Appareil pour la production de pâte

(30) Priorität: 27.08.1993 DE 4328922
(43) Veröffentlichungstag der Anmeldung: 01.03.1995
(73) Patentinhaber: Piller, Oswald, D-85757 Karlsfeld (DE)
(72) Erfinder: Piller, Oswald, D-85757 Karlsfeld (DE)
(74) Vertreter: Haft, von Puttkamer, Berngruber, Czybulka

(56) Entgegenhaltungen:
- EP-A- 0 447 281
- LU-A- 56 056

## Beschreibung

Die vorliegende Erfindung betrifft eine Vorrichtung zur Herstellung von Teig, bestehend aus einer Knetanordnung, einem drehbar gelagerten Teigkessel und einer Abfuhranordnung für den fertig gekneteten Teig. Eine derartige Vorrichtung ist aus EP-A-0 447 281 bekannt.

Eine derartige Vorrichtung zur Herstellung von Teig weist einen im wesentlichen S-förmigen Knethaken auf, der die in den drehbar gelagerten Teigkessel eingefüllten Zutaten zu einem geschmeidigen Teig verarbeitet. Nach Beendigung des Knetvorgangs wird eine zentral und vertikal den Teigkessel durchsetzende sich mitdrehende und den Teigkesselboden durchsetzende Walze angehoben, wodurch eine Abfuhröffnung freigegeben wird, die von einer an der Unterseite der Walze und in deren Verlängerung angeordneten Transportvorrichtung in Form einer archimedischen Schraube durchsetzt wird. Durch die Drehbewegung dieser Schraube wird der größte Teil des im Teigkessel hergestellten Teiges nach unten abgeführt und kontinuierlich einem Transportband zugeführt zur weiteren Verarbeitung, z.B. Portionierung.

Eine derartige Abfuhranordnung für den fertig gekneteten Teig in Form einer archimedischen Schraube ist jedoch noch mit Nachteilen behaftet. Zum einen wird nicht der gesamte Inhalt des Teigkessels abgeführt, sondern diejenigen Anteile des fertigen Teiges, die sich in der Nähe der äußeren senkrechten Teigkesselwand befinden, erreichen nicht die Abfuhröffnung. Ferner erfolgt bei der Abfuhr durch die archimedische Schraube eine Kompression des Teiges, wodurch insbesondere bei Herstellung eines Roggenteiges durch Herauspressen der in ihm enthaltenen, für ein Aufgehen des Teiges unerläßlichen Luftbläschen, eine erhebliche Qualitätsverschlechterung eintritt.

Aufgabe der vorliegenden Erfindung ist es, eine Vorrichtung zur Herstellung von Teig zu schaffen, mit der unter Einsatz beliebiger Knetanordnungen sowohl Weizenmehl enthaltende Teige als auch Roggenmehl enthaltende Teige ohne Qualitätsminderung und restlos vollautomatisch aus dem Teigkessel in Richtung eines Transportbandes abgeführt werden können.

Ausgehend von einer Vorrichtung der eingangs näher genannten Art wird zur Lösung dieser Aufgabe vorgeschlagen, daß die Abfuhranordnung eine den gesamten Teigkesselboden bedeckende, sich mit dem Teigkessel drehende Platte aufweist, die auf einer mittig und zentral im Kessel angeordneten Hubstange gelagert ist, welche die Platte mit dem fertig gekneteten Teig bis zu einer Stellung in der Nähe des oberen Randes des Teigkessels anhebt und eine sich vom Rand des Teigkessels bis zu dessen Achse radial sich erstreckende Führungsschiene aufweist.

Die Führungsschiene ist vorteilhafterweise an ihrer Unterseite mit einer Messerkante versehen und weist die Form einer Hohlkehle auf, wobei die konkave Seite dem Teig zugewandt ist und ist zugleich in Längsrichtung gekrümmt.

Die erfindungsgemäße Vorrichtung weist den Vorteil auf, daß die gesamte im Teigkessel enthaltene fertig geknetete Teigmasse durch das Anheben der Platte und die Anordnung sowie Ausgestaltung der Führungsschiene aus dem Teigkessel in Richtung einer Weiterverarbeitung, z.B. eines Transportbandes, gefördert wird. Zugleich entfällt eine Kompression, d.h. Verdichtung des fertig gekneteten Teiges, so daß sowohl weizenmehlhaltige als auch roggenmehlhaltige Teige ohne Qualitätsbeeinträchtigung verarbeitet werden können. Die Vorrichtung ist robust, einfach im Aufbau und billig in der Herstellung. Sie arbeitet zuverlässig und bedarf keines manuellen Einsatzes, um eventuelle Teigreste aus dem Teigkessel zu entfernen.

Im folgenden wird die Erfindung anhand der Zeichnung näher erläutert, in der ein vorteilhaftes Ausführungsbeispiel dargestellt ist. Es zeigen:
Fig. 1 schematisch einen Querschnitt durch eine erfindungsgemäße Vorrichtung mit zugeordnetem Transportband und angehobener Platte,
Fig. 2 eine Draufsicht auf den Teigkessel samt der zugehörigen Führungsschiene und
Fig. 3 die Vorrichtung mit abgesonderter Platte.

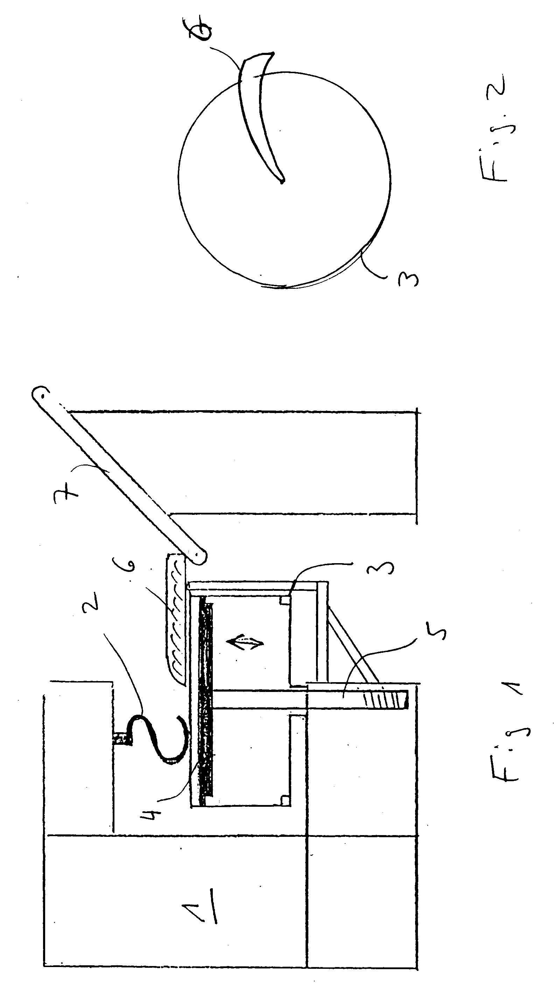

Bei dem in Fig. 1 dargestellten Schnitt durch ein Ausführungsbeispiel ist mit 1 das Gestell einer Vorrichtung zur Herstellung von Teig, beispielsweise eine Knetmaschine, bezeichnet, die mit einem rotierenden Knethaken 2 versehen ist. Dieser Knethaken 2 kann in einen Teigkessel 3 abgesenkt werden, der in herkömmlicher Weise entweder automatisch oder manuell mit den Teigzutaten gefüllt wird. Der Teigkessel 3 dreht sich, während der Knethaken 2 um seine Längsachse rotiert, so daß nach Ablauf einer gewissen Zeit die Zutaten zu einem fertigen Teig verknetet worden sind.

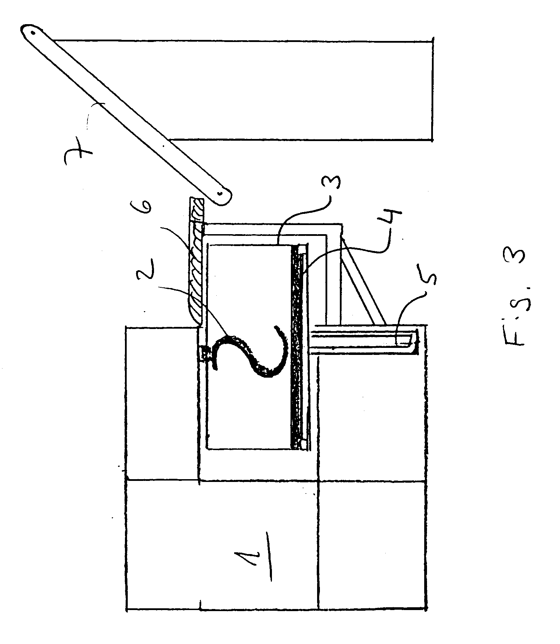

Erfindungsgemäß ist nun im Teigkessel 3 eine dessen gesamten Querschnitt bedeckende, höhenverstellbare Platte 4 vorgesehen, die in Fig. 1 in ihrer oberen Stellung und in Fig. 3 in ihrer unteren Stellung dargestellt ist und die entlang des Doppelpfeiles durch eine Hubstange 5 bewegbar ist, die zentral und vertikal den Teigkessel 3 durchsetzt. Während des Knetvorganges befindet sich die Platte 4 in ihrer unteren, d.h. abgesenkten Stellung und dreht sich mit dem Teigkessel 3. Nach Beendigung des Knetvorgangs wird die Platte 4 durch die Hubstange 5 (elektrisch, mechanisch oder pneumatisch) angehoben, wobei sie ihre Drehung mit der gleichen Geschwindigkeit wie der Teigkessel 3 beibehält. Oberhalb des Teigkessels 3 ist eine Führungsschiene 6 vorgesehen, die sich in der Nähe des Randes des Teigkessels 3 bis zu dessen gedachter Achse erstreckt (Fig. 2), wobei die Führungsschiene an ihrer Unterseite zur Abtrennung eines Teigstreifens mit einer Messerkante versehen ist; die Führungsschiene 6 weist ferner die Form einer Hohlkehle auf, wobei die konkave Seite dem ihr zufließenden Teig zugewandt ist; ferner ist die Führungsschiene 6 in Längsrichtung gekrümmt.

Die sich kontinuierlich nach oben bewegende Platte 4 mit dem auf ihr liegenden fertigen Teig nähert sich der Führungsschiene 6, wobei diese, aufgrund ihrer messerartigen Unterseite sowie der gekrümmten und hohlen Form, einen Teigstreifen abschneidet, der dem Förderband 7 zugeführt wird. Dieser kontinuierliche vom Teigvorrat abgeschnittene Teigstrang wird ohne Unterbrechung dem Förderband 7 zugeführt, bis der Teigvorrat im Teigkessel 3, d.h. auf der im Teigkessel 3 sich befindlichen Platte 4 vollständig, d.h. restlos, abgeführt worden ist.

Danach wird die Platte 4 abgesenkt, wonach der Teigkessel erneut mit den entsprechenden Zutaten zur Herstellung eines Teiges gefüllt werden kann.

Ein Zusammenpressen des Teiges beim Abführen erfolgt nicht, da dieser locker an der Führungsschiene 6 anliegt, so daß auch keine Kompression auftritt. Anstelle eines Knethakens S können auch andere in der Groß- und Kleinbäckerei bekannte Knetanordnungen verwendet werden, wie z.B. L-förmige Rührvorrichtungen für Roggenteige oder 88-Rühranordnungen anstelle des S-förmigen Knethakens.

## Patentansprüche

1. Vorrichtung zur Herstellung von Teig, bestehend aus einer Knetanordnung (1,2), einem drehbar gelagerten Teigkessel (3) und einer Abfuhranordnung für den fertig gekneteten Teig, dadurch gekennzeichnet, daß die Abfuhranordnung eine den gesamten Teigkesselboden bedeckende, sich mit dem Teigkessel drehende Platte (4) aufweist, die auf einer mittig und zentral im Kessel (3) angeordneten Hubstange (5) gelagert ist, welche die Platte (4) mit dem fertig gekneteten Teig bis zu einer Stellung in der Nähe des oberen Randes des Teigkessels (3) kontinuierlich anhebt und eine sich vom Rand des Teigkessels bis zu dessen Achse radial sich erstreckende Führungsschiene (6) aufweist.

2. Vorrichtung nach Anspruch 1, dadurch gekennzeichnet, daß die Führungsschiene (6) an ihrer Unterseite mit einer Messerkante versehen ist.

3. Vorrichtung nach Ansprüchen 1 und 2, dadurch gekennzeichnet, daß die Führungsschiene (6) die Form einer Hohlkehle aufweist, wobei die konkave Seite dem Teig zugewandt ist.

4. Vorrichtung nach Ansprüchen 1, 2 und 3, dadurch gekennzeichnet, daß die Führungsschiene (6) in Längsrichtung gekrümmt ist.

## Claims

1. Machine for making dough, consisting of a kneading arrangement (1, 2), a dough basin (3) mounted for rotation, and a discharging arrangement for the dough once it has been fully kneaded, characterised in that the discharging arrangement features a plate (4) which covers the entire floor of the dough basin and rotates with the dough basin, and which is mounted on a lifting rod (5) which is disposed axially at the centre of the basin (3) and which continuously raises the plate (4) and the fully kneaded dough as far as a position near the upper rim of the dough basin (3) and incorporates a guide rail (6) which extends radially from the rim of the dough basin as far as the axis thereof.

2. Machine according to claim 1, characterised in that the lower face of the guide rail (6) is provided with a cutting edge.

3. Machine according to claims 1 and 2, characterised in that the guide rail (6) has a chamfered shape, with the concave side facing the dough.

4. Machine according to claims 1, 2 and 3, characterised in that the guide rail (6) is curved in the longitudinal direction.

## Revendications

1. Dispositif pour la fabrication de pâte, se composant d'un appareil de pétrissage (1, 2), d'une cuve à pâte (3) supportée rotativement, et d'un mécanisme de retirage pour la pâte dont le pétrissage est terminé, caractérisé en ce que le mécanisme de retirage comporte une plaque (4) qui tourne avec la cuve à pâte, couvre tout le fond de celle-ci, est supportée en son centre par une barre de soulèvement placée au milieu de la cuve, cette barre élevant de manière continue la plaque (4) avec la pâte dont le pétrissage est terminé jusqu'a une position voisine du bord supérieur de la cuve, une coulisse de guidage (6) étant disposée de manière a s'étendre radialement du bord de la cuve jusqu'à son axe.

2. Dispositif selon la revendication 1, caractérisé en ce que la coulisse de guidage présente, sur son bord inférieur, une arête de couteau.

3. Dispositif selon les revendications 1 et 2, caractérisé en ce que la coulisse de guidage (6) présente la forme d'une gorge dont la concavité est tournée vers la pâte.

4. Dispositif selon les revendications 1, 2 et 3, caractérisé en ce que la coulisse de guidage est incurvée dans le sens de sa longueur.
